(19) Europäisches Patentamt
European Patent Office
Office européen des brevets

(11) Veröffentlichungsnummer: **0 212 345 B1**

(12) # EUROPÄISCHE PATENTSCHRIFT

(45) Veröffentlichungstag der Patentschrift: **04.09.91**

(51) Int. Cl.[5]: **C09B 67/26**, C09B 69/02, D06P 1/39, D06P 3/32

(21) Anmeldenummer: **86110331.5**

(22) Anmeldetag: **26.07.86**

Die Akte enthält technische Angaben, die nach dem Eingang der Anmeldung eingereicht wurden und die nicht in dieser Patentschrift enthalten sind.

(54) **Wässrige Farbstoffzubereitung, ihre Herstellung und Verwendung.**

(30) Priorität: **17.08.85 DE 3529495**

(43) Veröffentlichungstag der Anmeldung: **04.03.87 Patentblatt 87/10**

(45) Bekanntmachung des Hinweises auf die Patenterteilung: **04.09.91 Patentblatt 91/36**

(84) Benannte Vertragsstaaten: **CH DE FR GB IT LI**

(56) Entgegenhaltungen:
**EP-A- 0 013 919**
**EP-A- 0 073 387**
**FR-A- 2 323 744**
**US-A- 3 802 836**

(73) Patentinhaber: **CASSELLA Aktiengesellschaft**
**Hanauer Landstrasse 526**
**W-6000 Frankfurt am Main 61(DE)**

(72) Erfinder: **Bauer, Wolfgang, Dr.**
**Masurenstrasse 6**
**W-6457 Maintal 3(DE)**
Erfinder: **Steckelberg, Willi, Dr.**
**Goldgrabenstrasse 24**
**W-6238 Hofheim(DE)**
Erfinder: **Münch, Norbert, Dr.**
**Johann-Strauss-Strasse 39**
**W-6233 Kelkheim(DE)**

(74) Vertreter: **Urbach, Hans-Georg, Dr. et al**
**Hanauer Landstrasse 526**
**W-6000 Frankfurt am Main 61(DE)**

EP 0 212 345 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft flüssige, wäßrige Zubereitungen von Trisazofarbstoffen der Formel I

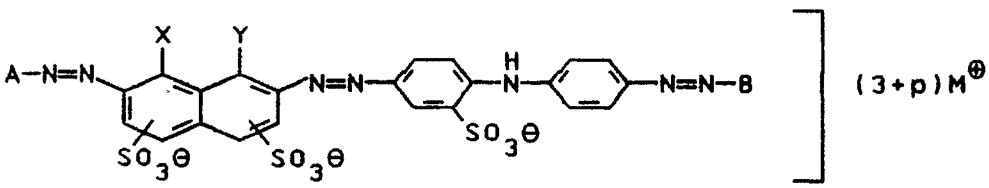
(I)

worin
A den Rest einer Diazokomponente der Benzol-, Naphthalin-oder heterocyclischen Reihe bedeutet,
X und Y für Hydroxy- oder Amino-Gruppen stehen, wobei X ungleich Y ist,
B den Rest einer Kupplungskomponente der Formel II

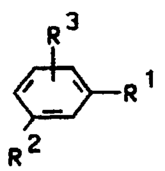
(II)

bedeutet, worin
$R^1$ Hydroxy oder eine
gegebenenfalls substituierte Aminogruppe,
$R^2$ Wasserstoff, Hydroxy oder eine gegebenenfalls substituierte Aminogruppe,
$R^3$ Wasserstoff oder einen bei Kupplungskomponenten in Trisazofarbstoffen üblichen Substituenten und
$M^{\oplus}$ ein Kation oder ein Gemisch verschiedener Kationen bedeuten, wobei mindestens 1 Äquivalent pro Mol des Farbstoffs der Kationen $M^{\oplus}$ Lithium-Kationen und/oder Kationen der Formel III

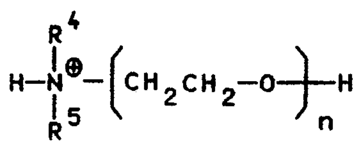
(III)

sind, wobei
n eine Zahl von 1 bis 30 ist und
$R^4$ und $R^5$ unabhängig voneinander Wasserstoff oder eine Gruppe der Formel

$$-(CH_2CH_2-O)_n-H$$

oder einen aliphatischen Rest mit 1 bis 18 C-Atomen bedeuten und p gleich der Zahl der im Molekül vorhandenen CarboxylatGruppen ist, wobei die für $R^1$ und/oder $R^2$ stehend gegebenenfalls substituierte Aminogruppe einen oder zwei Substituenten aus der Reihe Alkyl, Hydroxyalkyl, Carboxyalkyl, Alkanoyl, mit jeweils 1 bis 4 C-Atomen, die Gruppe der Formel V

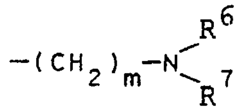

(V)

oder Phenyl, das seinerseits gegebenenfalls durch Alkyl mit 1 bis 4 C-Atomen, Alkoxy mit 1 oder 2 C-Atomen oder Chlor ein-oder zweifach substituiert ist, tragen kann, wobei $R^6$ und $R^7$ unabhängig voneinander Wasserstoff, Alkyl mit 1 bis 4 C-Atomen, ein- oder zweifach durch OH und/oder Chlor substituiertes Alkyl mit 1 bis 4 C-Atomen bedeuten oder wobei $R^6$ und $R^7$ zusammen mit dem N-Atom, an das sie gebunden sind und gegebenenfalls unter Einschluß eines zweiten Heterogliedes >O, >S oder >$NR^8$ einen heterocyclischen Ring bilden und $R^8$ Alkyl oder Hydroxyalkyl mit 1 bis 8 C-Atomen bedeutet und m für 2 oder 3 steht.

Die Reste A leiten sich bevorzugt von Diazokomponenten der Benzol-Reihe ab, es können jedoch auch Diazokomponenten der Naphthalin-Reihe oder heterocyclische Diazokomponenten, beispielsweise der Benzthiazol-Reihe, eingesetzt werden.

Sofern die Diazokomponente A ein Phenyl- oder ein $\alpha$- bzw. $\beta$-Naphthylrest ist, kann er unsubstituiert oder durch Alkyl, Alkoxy, jeweils mit 1 bis 4 C-Atomen, Hydroxy, Cyan, Nitro, Carboxy, Chlor, Brom, Alkoxycarbonyl mit 2 bis 5 C-Atomen, Alkanoyl mit 1 bis 4 C-Atomen, Benzoyl, Phenylamino, das im Phenylrest durch Nitro substituiert sein kann, Alkanoylamino mit 2 bis 4 C-Atomen, Benzoylamino, Carbonamid, das am Stickstoff ein- oder zweifach durch Alkyl mit 1 bis 4 C-Atomen oder Phenyl substituiert sein kann, Sulfonamid, das am Stickstoff ein- oder zweifach durch Alkyl mit 1 bis 4 C-Atomen substituiert sein kann, ein- oder mehrfach, z.B. zwei- oder dreifach, substituiert sein. Für die Monosubstitution eines für A stehenden Phenyl- oder $\alpha$- oder $\beta$-Naphthylrestes kommen insbesondere die Substituenten Nitro, Chlor, Carboxy, Alkyl und Alkoxy mit 1 bis 4, vorzugsweise 1 bis 2, C-Atomen, Hydroxy, Cyan oder Alkanoylaminogrupen mit 2 bis 5 C-Atomen, vorzugsweise die Acetylaminogruppe, in Frage. Für eine Disubstitution des für A stehenden Phenyl-oder $\alpha$- bzw. $\beta$-Naphthylresteskommen die Substituenten Chlor und/oder Brom und/oder Nitro und/oder Alkyl und/oder Alkoxy mit 1 bis 2 C-Atomen und/oder Carboxy und/oder Hydroxy und/oder Cyan, insbesondere aber die Substituenten Chlor und/oder Brom und/oder Nitro und/oder Alkyl mit 1 bis 2 C-Atomen und/oder Carboxy und/oder Alkoxy mit 1 oder 2 C-Atomen in Betracht. Substituenten, die für eine Dreifachsubstitution des für A stehenden Phenyl- oder $\alpha$- oder $\beta$-Naphthylrestes in Frage kommen, sind Chlor und/oder Hydroxy. Bevorzugt sind solche erfindungsgemäßen wasserlöslichen Trisazofarbstoffe, in denen A ein Phenyl-Rest ist, der wie oben angegeben substituiert oder unsubstituiert ist.

Alkylgruppen mit 1 bis 4 C-Atomen, die als Substituenten für den Rest einer Diazokomponente A in Frage kommen, sind Methyl, Ethyl, Propyl-1, Propyl-2, Butyl-1, Butyl-2, 2-Methylpropyl-1 und tert.Butyl. Alkoxygruppen mit 1 bis 4 C-Atomen, die als Substituenten für den Rest A in Frage kommen, sind Methoxy, Ethoxy, Propoxy, Isopropoxy, But-1-oxy, But-2-oxy, Isobutoxy und tert.Butoxy. Alkanoylaminogruppen mit 2 bis 5 C-Atomen, die als Substituenten A in Frage kommen, sind z.B. Formylamino, Acetylamino, Propionylamino, Butyrylamino, Isobutyrylamino und Valeroylamino.

Besonders bevorzugte Substituenten für einen für A stehenden $\alpha$- oder $\beta$-Naphthyl- oder vorzugsweise einen Phenylrest sind: Carboxy, Methyl, Chlor, Brom, Methoxy, Nitro.

Ein für den Rest einer Diazokomponente A stehender Benzthiazol-2-Rest kann vorzugsweise in 6-Stellung durch Nitro, Chlor, Carboxy, Alkyl oder Alkoxy mit 1 bis 4 C-Atomen, Hydroxy oder Acylamino mit 2 bis 5 C-Atomen, vorzugsweise aber durch Nitro, Chlor, Alkyl oder Alkoxy mit 1 oder 2 C-Atomen oder Acetylamino monosubstituiert sein.

Ein für A stehender Phenylrest kann auch in 4-Stellung durch einen Rest der Formel IV

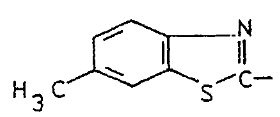

(IV)

substituiert sein.

Besonders bevorzugt für A ist Phenyl, das unsubstituiert oder ein- oder zweifach substituiert ist, vorzugsweise durch die oben genannten bevorzugten Substituenten.

Beispiele für geeignete Diazokomponenten sind: Anilin, 2-, 3-und 4-Chloranilin, 2-, 3- und 4-Methylanilin, 2-, 3- und 4-Methoxyanilin, 2-, 3- und 4-Ethoxyanilin, 2-Methoxy-5-methylanilin, 2-, 3- und 4-Nitroanilin,

2-Chlor-4-nitroanilin, 2-Amino-benzoesäure, 4-Amino-benzoesäure, 4-Amino-benzoesäure-amid, 4-Aminobenzolsulfonsäure-amid, 2,5-Dichloranilin, 1-Aminonaphthalin, Dehydrothiotoluidin.

Eine in der Kupplungskomponente B für $R^1$ oder $R^2$ stehende Aminogruppe kann unsubstituiert sein oder einen oder zwei Substituenten tragen.

Vorzugsweise ist eine für $R^1$ oder $R^2$ stehende Aminogruppe unsubstituiert oder durch Alkyl oder Hydroxyalkyl mit 1 bis 4 C-Atomen mono- oder disubstituiert oder durch das genannte, gegebenenfalls substituierte, Phenyl, Alkanoyl mit 1 bis 4 C-Atomen, Carboxyalkyl oder Sulfoalkyl, jeweils insbesondere mit 1 bis 4 C-Atomen im Alkylrest oder die Gruppe der Formel V monosubstituiert oder durch das gegebenenfalls substituierte Phenyl bzw. Alkanoyl mit 1 bis 4 C-Atomen und Alkyl mit 1 bis 4 C-Atomen disubstituiert.

Besonders bevorzugt ist die Substitution einer für $R^1$ oder $R^2$ stehenden Aminogruppe durch Alkyl, Hydroxyalkyl, Carboxyalkyl, oder Alkanoyl mit jeweils 1 bis 4 C-Atomen oder durch einen Rest der Formel V. Falls sowohl $R^1$ als auch $R^2$ eine Aminogruppe bedeuten, sind vorzugsweise beide unsubstituiert oder nur eine, und zwar dann insbesondere die für $R^1$ stehende, substituiert.

Bei Kupplungskomponenten in Trisazofarbstoffen übliche Substituenten $R^3$ sind insbesondere Alkyl vorzugsweise mit 1 bis 4 C-Atomen, Alkoxy vorzugsweise mit 1 bis 4 C-Atomen, Hydroxyalkoxy vorzugsweise mit 2 bis 3 C-Atomen, Alkoxyalkoxy vorzugsweise mit 3 bis 4 C-Atomen, Carboxy, Chlor, Brom, Nitro und Alkoxycarbonyl mit 1 bis 4 C-Atomen im Alkoxyrest.

Bevorzugte, für $R^3$ stehende Substituenten sind Alkyl insbesondere mit 1 bis 4 C-Atomen, Alkoxy insbesondere mit 1 bis 3 C-Atomen, Hydroxyalkoxy insbesondere mit 1 bis 4 C-Atomen, und Alkoxyalkoxy insbesondere mit 2 bis 3 C-Atomen. Eine besonders bevorzugte Bedeutung für $R^3$ ist Wasserstoff.

Als Kupplungskomponenten der Formel II können z.B. eingesetzt werden: Phenol, 1,3-Dihydroxy-benzol, 1-Amino-3-hydroxy-benzol, 1,3-Diamino-benzol, 1,3-Diamino-4-methyl-benzol, 1,3-Diamino-4-methoxy-benzol, 1,3-Diamino-4-(2-hydroxyethoxy)-benzol, 1,3-Diamino-4-(2-methoxyethoxy)-benzol, 1-Carboxymethylamino-3-hydroxy-benzol, 1-Sulfomethylamino-3-hydroxy-benzol, 1-Hydroxyethylamino-3-hydroxy-benzol, 1-(2-Dimethylamino-ethylamino)-3-hydroxy-benzol, 1-(3-Dimethylaminopropylamino)-3-hydroxy-benzol.

Eine weitere Gruppe bevorzugter Diazokomponenten A und Kupplungskomponenten B sind solche, die Substituenten enthalten, welche in den Komponenten A bzw. E der im Color Index, 3. Auflage, Band 4, S. 4277 ff. unter den Nummern 30000 - 30400, insbesondere 30210 -30345, 30360, 30375 - 30390 referierten Trisazofarbstoffe vom Typ

$$A \rightarrow Z \leftarrow D \rightarrow E$$

enthalten sind.

Die Zahl p der in dem Trisazofarbstoff der Formel I vorhandenen Carboxylat-gruppen ($-COO^{\ominus}$) kann z.B. 0, 1, 2 oder 3 betragen. Vorzugsweise ist $p = 0$, so daß der Ausdruck $(3+p)$ in der Formel I vorzugsweise 3 bedeutet.

In dem Trisazofarbstoff der Formel I können pro Mol maximal $(3+p)$, vorzugsweise 3, Äquivalente Lithium-Kationen und/oder Kationen der Formel III vorhanden sein. Falls pro Mol des Farbstoffs I zwischen 1 und $(3+p)$, vorzugsweise 3, Äquivalente Lithium-Kationen und/oder Kationen der Formel III vorhanden sind, besteht der Rest der Kationen aus Natrium-Kationen.

Besonderes bevorzugt sind auch Zubereitungen solcher Farbstoffe, die zwei oder mehrere bevorzugte Merkmale aufweisen.

Bevorzugte Farbstoffzubereitungen leiten sich von Farbstoffen der Formeln VI und VII ab

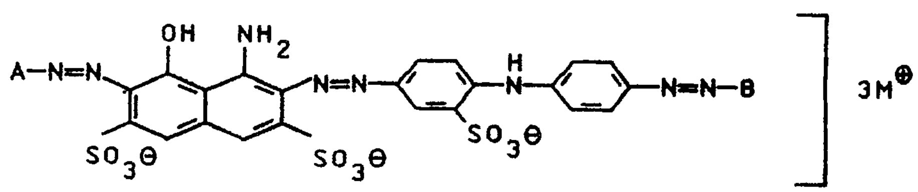

(VI)

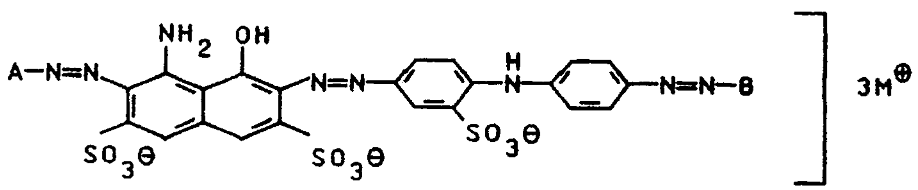

(VII)

worin A, B und $M^{\oplus}$ die bereits genannten Bedeutungen besitzen.

Besonders bevorzugte erfindungsgemäße Farbstoffzubereitungen enthalten einen Farbstoff der vorstehenden Formel VI, worin A den Phenylrest und
B den Rest

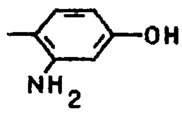 , 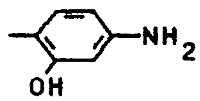 oder 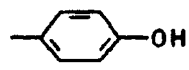

bedeuten und $M^{\oplus}$ die bereits genannte Bedeutung besitzt.

Die Herstellung von Trisazofarbstoffen in Form der Natrium-Salze der Formel Ia

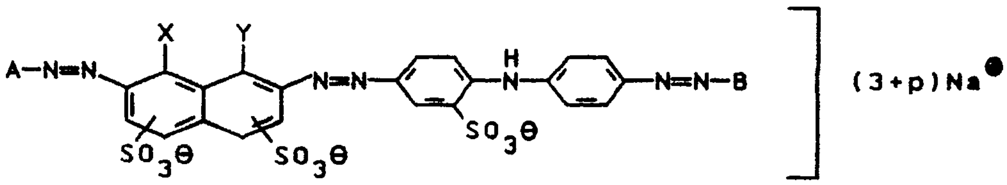 (Ia)

worin A, B, X Y und p die obengenannten Bedeutungen haben, ist an sich bekannt und geht beispielsweise aus folgenden Patentschriften hervor: DE-PS 943 662, DE-PS 10 46 221, DE-A-22 54 835, DE-B-22 15 953 und DE-A-31 34 063.

Die erfindungsgemäßen wäßrigen Farbstoffzubereitungen werden hergestellt, indem man die in an sich bekannter Weise hergestellten Natrium-Salze von Trisazofarbstoffen der Formel Ia im wäßrigen Medium mit einer Säure ausreichender Stärke auf pH-Werte zwischen 0 und 4, vorzugsweise 1 bis 2,5, stellt, die erhaltenen Farbsäuren der Formel Ib

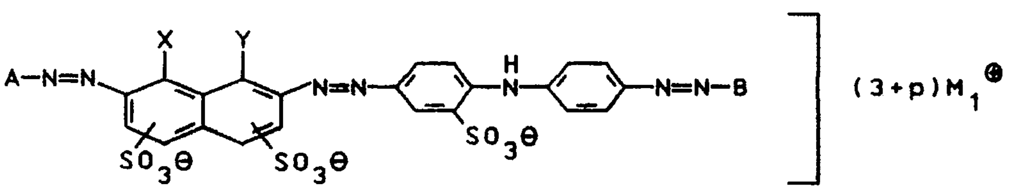 (Ib)

worin mindestens 1 Äquivalent pro Mol des Farbstoffs der Kationen $M_1^{\oplus}$Protonen sind,abtrennt, dann wäscht und anschließend in wäßrigem Medium mit Lithiumhydroxid und/oder dem Lithiumsalz einer hinreichend schwachen Säure und/oder mit einem Amin der Formel VIII

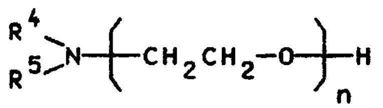 (VIII)

worin $R^4$, $R^5$ und n die oben bereits angegebenen Bedeutungen besitzen, vereinigt, wobei Zubereitungen von Farbsalzen der Formel I entstehen.

Säuren ausreichender Stärke, mit denen aus den Na-Salzen der Formel Ia die Farbsäuren der Formel Ib freigesetzt werden können, sind solche, die es gestatten, in wäßriger Lösung in Gegenwart ihrer Na-Salze einen pH-Wert von 4 einzustellen. Mit diesen Säuren gelingt es, mindestens 1 Äquivalent pro Mol des Farbstoffs der Formel Ia Na-Kation durch Proton zu ersetzen.

Derartige Säuren haben einen pKa-Wert von höchstens etwa 4. Die Auswahl der Säuren kann somit nach bekannten Kriterien in einfacher Weise erfolgen. Sowohl organische Säuren, wie z.B. Ameisensäure, Halogenessigsäure, Milchsäure, Oxalsäure, als auch vorzugsweise anorganische Säuren, wie z.B. Salzsäure, Salpetersäure, Schwefelsäure oder Phosphorsäure, erfüllen diese Stärkebedingung. Aus Kostengründen

werden zur Freisetzung der Farbstoffsäure der Formel Ib die anorganischen Säuren, insbesondere Salzsäure, Schwefelsäure oder Phosphorsäure, bevorzugt. Es kann auch ein Gemisch verschiedener geeigneter Säuren verwendet werden.

Die Überführung des Natrium-Salzes der Formel Ia in die Farbsäure der Formel I b geschieht in der Regel so, daß das Natriumsalz in die wäßrige Lösung der Säure oder in die wäßrige Lösung verschiedener Säuren, zweckmäßigerweise unter Rühren, eingetragen wird und daß die Suspension anschließend noch einige Zeit, z.B. 0, 25 bis 4 Stunden, vorzugsweise 0, 3 bis 3 stunden, nachgerührt wird. Das Eintragen und Nachrühren kann bei Umgebungstemperaturen durchgeführt werden. Zweckmäßigerweise wird jedoch das Eintragen und/oder das Nachrühren bei erhöhter Temperatur von z.B. 25 bis 80 ° C, vorzugsweise 40 bis 60 ° C, durchgeführt.

Das Abtrennen der Farbsäure geschieht normalerweise durch Filtration, kann aber auch auf andere Weise, z.B. durch Zentrifugation, erfolgen.

Die abgetrennte Farbsäure wird dann zur Entfernung der Hauptelektrolytmenge gewaschen. Das Waschen erfolgt normalerweise mit Wasser oder mit angesäuertem Wasser.

In der Regel sind in der erhaltenen Farbsäure der Formel Ib mehr als 1 Äquivalent pro Mol des Farbstoffs Protonen vorhanden. Vorzugsweise ist die in dem Natriumsalz der Formel Ia ursprünglich vorhandene Menge an Natrium-kationen möglichst ganz durch Protonen ersetzt worden.

Die Farbsäure der Formel Ib wird dann in wäßrigem Medium mit Lithiumhydroxid und/oder einem Lithiumsalz einer hinreichend schwachen Säure und/oder mit einem Amin der Formel VIII vereinigt. Dies geschieht normalerweise dadurch, daß die noch feuchte Farbsäure, zweckmäßigerweise portionsweise, in eine Lösung von Lithiumhydroxid und/oder einem Lithiumsalz einer hinreichend schwachen Säure und/oder einem Amin der Formel VIII in Wasser, zweckmäßigerweise unter Rühren, eingetragen und gelöst wird. Während der Eintragung und des Lösens wird zweckmäßigerweise eine erhöhte Temperatur von z.B. 25 bis 80 ° C, vorzugsweise 40 bis 60 ° C, eingehalten. Lithiumsalze einer hinreichend schwachen Säure, die zur Einführung des Lithiumkations in die erfindungsgemäßen Farbstoffe der Formel I mit den Farbstoffsäuren der Formel Ib umgesetzt werden, sind Lithiumsalze von Säuren, deren Säurestärke deutlich unter der Säurestärke der in den Farbstoffsäuren der Formel Ib enthaltenen Sulfonsäuregruppen liegt. Beispiele für solche Salze sind Lithiumsalze vieler organischer Säuren, wie z.B. Lithiumacetat oder Lithiumsalze schwacher oder zersetzlicher anorganischer Säuren wie z.B. Lithiumcarbonat, Lithiumsulfit, Lithiumborat oder Trilithiumphosphat.

Vorzugsweise wird zur Einführung des Lithiumkations Lithiumhydroxid oder Lithiumcarbonat eingesetzt. Die Farbsäure der Formel Ib kann auch mit einem Gemisch aus Lithiumhydroxid und/oder einem oder mehreren Lithiumsalzen hinreichend schwacher Säure und/oder einem oder mehreren Aminen der Formel VIII umgesetzt werden.

Sehr vorteilhafte erfindungsgemäße Farbstoffzubereitungen enthalten sowohl Lithiumkationen als auch Ammoniumkationen der Formel III. Diese Farbstoffzubereitungen werden erhalten, wenn die Farbstoffsäure der Formel Ib mit einer Mischung aus Lithiumkationen spendenden Substanzen und einem oder mehreren Aminen der Formel VIII umgesetzt wird.

Die Amine der Formel VIII sind bekannt bzw. handelsübliche Substanzen. n bedeutet vorzugsweise eine Zahl von 1 bis 25. Geeignete Amine der Formel VIII sind beispielsweise: Ethanolamin, Di-ethanolamin, Triethanolamin, N-Methyl-N-ethanolamin, N-; Methyl-N-di-ethanolamin, 2-(2-Hydroxy-ethoxy)-ethanamin, Di-(2-(2-hydroxy-ethoxy)-ethan)-amin, Tri-(2-(2-hydroxy-ethoxy)-ethan)-amin, N-Methyl-N-di-(2-(2-hydroxy-ethoxy)-ethan)amin, ethoxylierter Ammoniak und ethoxylierte primäre und sekundäre aliphatische Amine mit 1 bis 30, vorzugsweise 1 bis 25, Ethoxyleinheiten im Molekül. Derartige ethoxylierte aliphatische Amine sind als ethoxylierte Fettamine unter verschiedenen Bezeichnungen im Handel, z.B. als ®Genamine der Firma Hoechst AG, Frankfurt/Main. Dabei handelt es sich zumeist um ethoxyliertes Cocosfettamin, Spermölfettamin, Stearylamin und Talgfettamin mit Ethoxylierungsgraden von zumeist 2 bis 25. Diese Produkte sind technische Gemische entsprechend der Zusammensetzung der zur Herstellung der Fettamine benutzten Fettsäuren.

Es kann zweckmäßig sein, anstelle eines Amins der Formel VIII ein Gemisch aus Ethanolamin, insbesondere aber Di-ethanolamin und einem handelsüblichen ethoxylierten Fettamin mit Ethoxylierungsgraden von 2 bis 25 einzusetzen.

Bei der Vereinigung, d.h. Umsetzung der Farbsäure der Formel Ib mit dem Lithiumhydroxid und/oder dem Lithiumsalz und/oder dem Amin der Formel VIII wird von dem Amin und/oder der Lithiumverbindung so viel verwendet, daß sich in dem wäßrigen Medium ein pH-Wert von 7 bis 10, vorzugsweise von 8 bis 9, einstellt.

Die Umsetzung der Farbsäure der Formel Ib mit dem Lithiumhydroxid und/oder dem Lithiumsalz einer hinreichend schwachen Säure und/oder einem Amin der Formel VIII erfolgt in einem wäßrigen Medium, d.h.

vorzugsweise in Wasser. Vor, während oder nach der Umsetzung können jedoch auch noch bekannte Lösungsmittel bzw. bekannte hydrotrope Verbindungen aus der Reihe der ein-oder mehrwertigen Alkohole bzw. Polydiole, der amidischen Verbindungen oder der hydrotropen Salze zugesetzt werden. Häufig verwendete hydrotrope Mittel, die auch den erfindungsgemäßen Zubereitungen zugesetzt werden können, sind beispielsweise Harnstoff, N-Methylacetamid, xylolsulfonsaures Natrium.

Ferner können bekannte nichtionogene oder anionische Tenside während oder nach der Herstellung den erfindungsgemäßen, hochkonzentrierten Farbstoffzubereitungen zugefügt werden.

Eine Übersicht über geeignete nichtionogene oder anionische Tenside findet sich z.B. in "Ullmann, Encyklopädie der technischen Chemie", 4. Auflage, Bd. 10, Seiten 449 ff, sowie Bd. 22, S. 455 ff.

Beispiele für vorzugsweise eingesetzte Tensid-Typen sind: sulfatierte primäre und sekundäre Alkohole und deren Salze, Alkylsulfonate und deren Salze, oxethylierte Alkohole, oxethylierte Alkylphenole, Oxethylierungsprodukte von kondensierten Phenolen.

Bei der Herstellung der erfindungsgemäßen Farbstoffzubereitungen werden die Mengenverhältnisse in der Regel so gewählt, daß möglichst hochkonzentrierte Farbstoffzubereitungen mit einem Farbstoffgehalt von z.B. 35 bis 45 Gew. % entstehen.

Da die erfindungsgmäßen wäßrigen Farbstoffzubereitungen überraschenderweise bis zu 45 Gew. % Reinfarbstoff enthalten können, sind durch sie besondere wirtschaftliche Vorteile hinsichtlich der Lager- und Transportkosten gegeben. Im Vergleich zu den in der EP-A2-0-129797 beschriebenen flüssigen Farbstoffzubereitungen können die erfindungsgemäßen Farbstoff-Formulierungen in höherer Konzentration und nach einem wesentlich einfacheren und wirtschaftlicheren Verfahren hergestellt werden. Bei diesem bekannten Verfahren werden die Natriumsalze der Farbstoffe mit einem, insbesondere mit Wasser nicht mischbaren, Amin versetzt, und die Aminsalze der Farbstoffe werden durch Absenken des pH-Wertes unter 3 ausgefällt. Die Aminsalze werden isoliert, gewaschen und dann mit Lithiumhydroxid versetzt. Das dadurch in Freiheit gesetzte Amin wird dann abdestilliert. Eine in Gegenwart von Aminen, z.B. Tri-isobutylamin, durchgeführte Fällung ist bei der Herstellung der erfindungsgemäßen Farbstofflösungen nicht erforderlich, so daß besondere Maßnahmen im Hinblick auf Regeneration des eingesetzten Amins und Abwasser-Reinhaltung entfallen. Ferner kann bei der Herstellung der erfindungsgemäßen Farbstofflösungen darauf verzichtet werden, die bei der Filtration erhaltenen Farbstoffsäuren vollständig salzfrei zu waschen. Dabei ist es überraschend, daß auch NaClhaltige, erfindungsgemäße Farbstoffzubereitungen in hoher Konzentration und mit guter Lagerstabilität herstellbar sind.

Aus der EP-A2-0 013 919 ist eine wäßrige Farbstoffzubereitung bekannt, die einen alkalistabilen Azodirektfarbstoff, der mindestens eine aromatische Hydroxyl- und/oder Enolgruppe und mindestens eine wasserlöslichmachende Gruppe oder ein Gemisch derartiger Azofarbstoffe enthält und die einen pH-Wert von gleich oder größer als 12 besitzt. Gegenüber dieser bekannten wäßrigen Farbstoffzubereitung besitzen die erfindungsgemäßen Farbstoffzubereitungen z.B. eine bessere Lagerstabilität.

Die erfindungsgemäßen flüssigen, wäßrigen Farbstoffzubereitungen von Trisazofarbstoffen der Formel I eignen sich hervorragend zum Färben von verschiedenen Lederarten, beispielsweise Rindbox, Boxcalf, Spaltvelour oder Bekleidungsvelour, nach den üblichen Färbeverfahren; sie können jedoch auch zum Färben von Baumwolle, Polyamid, Papier oder Holz oder zur Herstellung von Schreibtinten, z.B. für das ink-jet-Verfahren, eingesetzt werden. Man erhält, insbesondere auf Leder, sehr egale Färbungen hoher Farbstärke mit guter Lichtechtheit, Lösungsmittelechtheit, Naßechtheit, Lickerechtheit, Reibechtheit, Schweißechtheit sowie sehr guter Beständigkeit gegen Wasserhärte, Formaldehyd, Ameisensäure und Alkali. Gegenüber den in DE-PS 943662 beschriebenen Natriumsalzen von Trisazofarbstoffen weisen die erfindungsgemäßen Farbstoffzubereitungen überraschenderweise, insbesondere auf Velour-Lederarten, eine deutlich höhere Farbstärke bzw. Substantivität auf.

In den folgenden Beispielen bedeuten Prozente Gewichtsprozente, die Temperaturen sind in Celsiusgraden angegeben.

Beispiel 1:

500 g eines Trisazofarbstoffs der Formel

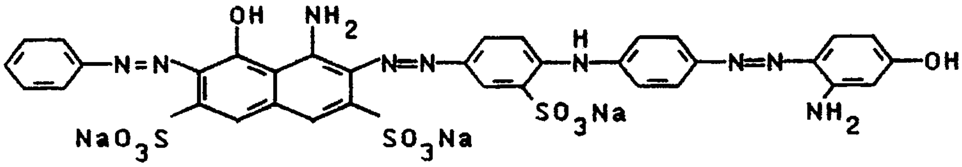

mit einem Reingehalt von 44% (Rest NaCl und $NaHCO_3$) werden in eine Mischung von 250 ml 32%ige Salzsäure und 5 Liter Wasser eingetragen.

Die saure Suspension wird 2 Stunden bei 50°C nachgerührt, filtriert und mit insgesamt 1 Liter 1,6%iger Salzsäure nachgewaschen.

Nach gutem Trockensaugen erhält man 525 g Farbsäure in feuchter Form (Trockengehalt 38%, NaCl-Gehalt 1%).

Die erhaltene feuchte Farbsäure wird bei ca. 50°C portionsweise in eine Mischung von 24 g Lithiumhydroxid-Monohydrat in 100 ml Wasser eingetragen und gelöst.

Man erhält eine lagerstabile, 35,5%ige Lösung des Trisazofarbstoff-Lithiumsalzes.

Geht man von einer konzentrierteren Farbstoffpaste aus oder engt die zunächst erhaltene 35,5%ige Lösung ein, kann eine Farbstoffkonzentration von 44 % bei ausgezeichneter Lagerstabilität und Handhabbarkeit erreicht werden.

Beispiel 2:

Verfährt man nach den Angaben des Beispiels 1, setzt jedoch statt einer Lösung von 24 g Lithiumhydroxid-Monohydrat 101,6 g Diethanolamin ein, so erhält man eine lagerstabile, gut handhabbare 44%ige Lösung des Trisazofarbstoffs in Form des Diethanolammonium-Salzes.

Der Tabelle 1 sind weitere Farbstoffe der Formel VI

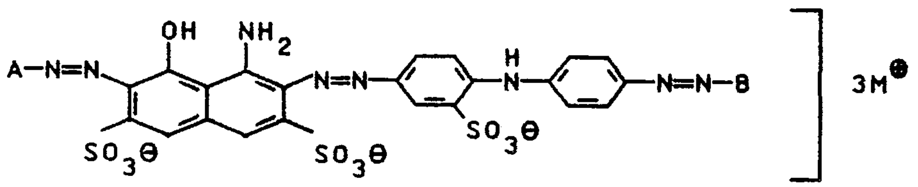

(VI)

zu entnehmen, die nach dem erfindungsgemäßen Verfahren in konzentrierter, lagerstabiler Flüssigform erhalten werden können, wobei in

Spalte 1 die Diazokomponente der Formel $A\text{-}NH_2$,
Spalte 2 die Kupplungskomponente der Formel B-H,
Spalte 3 das Kation der Formel $M^{\oplus}$,

aufgeführt ist. Dabei bedeutet in der Spalte 3:

$M^2$ = protoniertes handelsübliches ethoxyliertes Cocosfettamin mit 2 EO-Einheiten
$M^3$ = protoniertes handelsübliches ethoxyliertes Cocosfettamin mit 15 EO-Einheiten
$M^4$ = protoniertes handelsübliches Oleylamin mit 2 EO-Einheiten
$M^5$ = protoniertes handelsübliches ethoxyliertes Talgfettamin mit 2 EO-Einheiten
$M^6$ = proteniertes handelsübliches ethoxyliertes Stearylamin mit 8 EO-Einheiten.

Tabelle 1

Trisazofarbstoffe der Formel VI in Flüssigform:

| Beispiel | $A-NH_2$ | B-H | $M^{\oplus}$ |
|---|---|---|---|
| 3 | 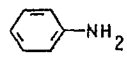 | 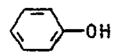 | $Li^{\oplus}$ |
| 4 | 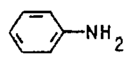 | 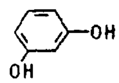 | $Li^{\oplus}$ |
| 5 | 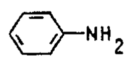 | 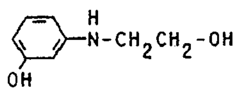 | $H_3N^{\oplus}-CH_2CH_2OH$ |
| 6 | 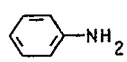 | 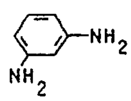 | $Li^{\oplus}$ |
| 7 | 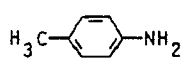 | 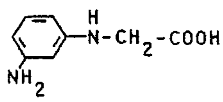 | $HN^{\oplus}(CH_2CH_2OH)_3$ |
| 8 | 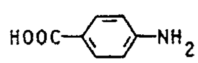 | 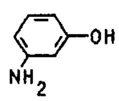 | $H_3C-\overset{H}{\underset{\oplus}{N}}-(CH_2CH_2OH)_2$ |
| 9 | 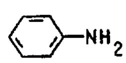 | 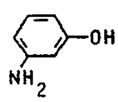 | $H_3C-\overset{H}{\underset{\oplus}{N}}-(CH_2CH_2-O-CH_2CH_2-OH)_2$ |
| 10 | 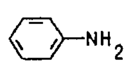 | 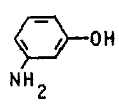 | $H_3C-\overset{H}{N}\left[CH_2CH_2\left(OCH_2CH_2\right)_5CH_2-CH_2-OH\right]_2$ |

| Beispiel | $A-NH_2$ | B-H | $M^{\oplus}$ |
| --- | --- | --- | --- |
| 11 | 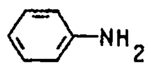 | 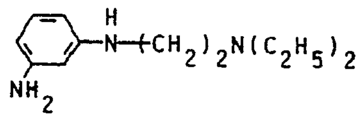 | $Li^{\oplus}$ |
| 12 | 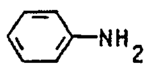 | 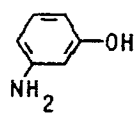 | $H_2N^{\oplus}(CH_2CH_2OH)_2$ + $Li^{\oplus}$ |
| 13 | 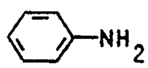 | 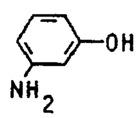 | $H_2N^{\oplus}(CH_2CH_2OH)_2$ + $M^2$ |
| 14 | 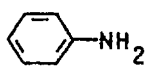 | 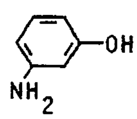 | $H_2N^{\oplus}(CH_2CH_2OH)_2$ + $M^3$ |
| 15 | 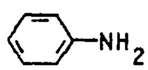 | 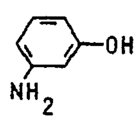 | $H_2N^{\oplus}(CH_2CH_2OH)_2$ + $M^3$ |
| 16 | 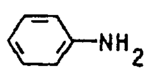 | 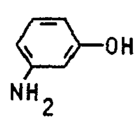 | $Li^{\oplus}$ + $M^4$ |
| 17 | 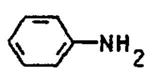 | 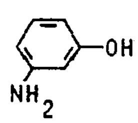 | $Li^{\oplus}$ + $M^5$ |
| 18 | 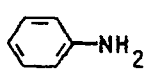 | 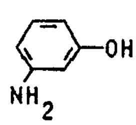 | $H_2N^{\oplus}(CH_2CH_2OH)_2$ + $M^6$ |

Die Herstellung der in der folgenden Tabelle 2 aufgeführten flüssigen Trisazofarbstoffe der Formel VII

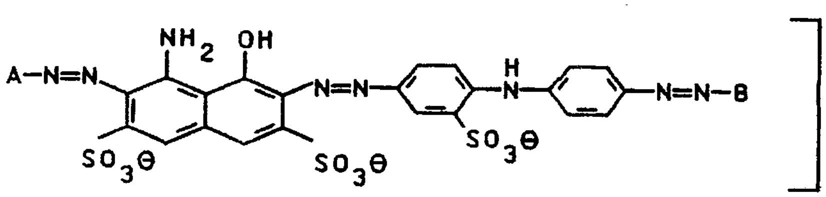

$3M^{\oplus}$ (VII)

erfolgt entsprechend den Angaben des Beispiels 1 durch Isolierung der aus den Natrium-Salzen mit Mineralsäuren erhaltenen Farbsäuren, Entfernen der Hauptmenge an herstellungsbedingten Elektrolyten durch Nachwaschen und anschließender Vereinigung mit Lithiumhydroxid und/oder Aminen der Formel VIII in Wasser bis zu einem pH-Wert von 7 bis 10.

Tabelle 2

Trisazofarbstoffe der Formel VII in Flüssigform

| Beispiel | $A-NH_2$ | B-H | $M^{\oplus}$ |
|---|---|---|---|
| 19 | 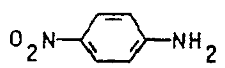 | 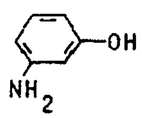 | $Li^{\oplus}$ |
| 20 | 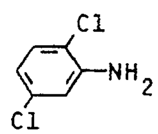 | 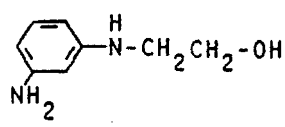 | $Li^{\oplus}$ |
| 21 | 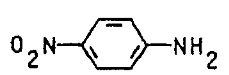 | 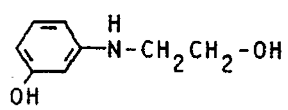 | $H_2N^{\oplus}-(CH_2CH_2OH)_2$ |

Färbebeispiel

In einem praxisüblichen Walkfass wird vegetabil vorgegerbtes, nachchromiertes Bekleidungsvelourleder wie nachfolgend angegeben gefärbt.
Die angegebenen Prozentzahlen beziehen sich auf das Trockengewicht des Leders.
1000 % Wasser 60 °C,
12,5 % einer 17%igen Farbstoffzubereitung nach Beispiel 13,
Laufzeit 45 Minuten, dann zugeben
2 % eines anionischen Fettlickers,
Laufzeit 30 Minuten, dann zugeben
1,5 % Ameisensäure 85%,
Laufzeit 30 Minuten.

Die nach dem Trocknen und praxisüblichen Fertigstellen der so gefärbten Leder erhaltene Schwarzfärbung weist eine sehr hohe Farbstärke sowie gute Echtheitseigenschaften, wie z.B. Lichtechtheit, Naßechtheit, Lösungsmittelechtheit und Licker-echtheit, auf und ist in dieser Hinsicht Färbungen mit bekannten nächstvergleichbaren Farbstoffen deutlich überlegen.

## Patentansprüche

1. Flüssige, einen pH-Wert von 7 bis 10 aufweisende wäßrige Zubereitungen von Trisazofarbstoffen der Formel I

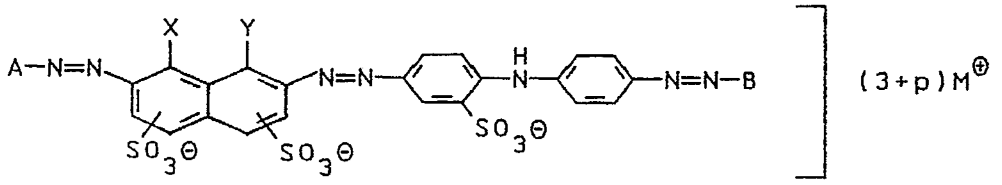 (I)

worin
A den Rest einer Diazokomponente der Benzol-, Naphthalin-oder heterocyclischen Reihe bedeutet,
X und Y für Hydroxy- oder Amino-Gruppen stehen, wobei X ungleich Y ist,
B den Rest einer Kupplungskomponente der Formel II

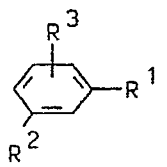 (II)

bedeutet, worin
$R^1$ Hydroxy oder eine gegebenenfalls substituierte Aminogruppe,
$R^2$ Wasserstoff, Hydroxy oder eine gegebenenfalls substituierte Aminogruppe,
$R^3$ Wasserstoff oder einen bei Kupplungskomponenten in Trisazofarbstoffen üblichen Substituenten und
$M^{\oplus}$ ein Kation oder ein Gemisch verschiedener Kationen bedeuten, wobei mindestens 1 Äquivalent pro Mol des Farbstoffs der Kationen $M^{\oplus}$ Lithium-Kationen und/oder Kationen der Formel III

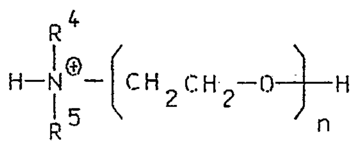 (III)

sind, wobei
n eine Zahl von 1 bis 30 ist und
$R^4$ und $R^5$ unabhängig voneinander Wasserstoff oder eine Gruppe der Formel

$$-(CH_2CH_2-O)_n-H$$

oder einen aliphatischen Rest mit 1 bis 18 C-Atomen bedeuten und
p gleich der Zahl der im Molekül vorhandenen Carboxylat-Gruppen ist,
wobei die für $R^1$ und/oder $R^2$ stehende gegebenenfalls substituierte Aminogruppe einen oder zwei Substituenten aus der Reihe Alkyl, Hydroxyalkyl, Carboxyalkyl, Alkanoyl, mit jeweils 1 bis 4 C-Atomen, die Gruppe der Formel V

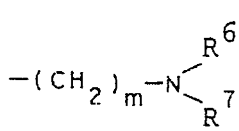 (V)

oder Phenyl, das seinerseits gegebenenfalls durch Alkyl mit 1 bis 4 C-Atomen, Alkoxy mit 1 oder 2 C-Atomen oder Chlor ein- oder zweifach substituiert ist, tragen kann, wobei $R^6$ und $R^7$ unabhängig voneinander Wasserstoff, Alkyl mit 1 bis 4 C-Atomen, ein- oder zweifach durch OH und/oder Chlor substituiertes Alkyl mit 1 bis 4 C-Atomen bedeuten oder wobei $R^6$ und $R^7$ zusammen mit dem N-Atom, an das sie gebunden sind und gegebenenfalls unter Einschluß eines zweiten Heterogliedes >O, >S oder >$NR^8$ einen heterocyclischen Ring bilden und $R^8$ Alkyl oder Hydroxyalkyl mit 1 bis 8 C-Atomen bedeutet und m für 2 oder 3 steht.

**2.** Farbstoffzubereitungen nach Anspruch 1, dadurch gekennzeichnet, daß der Rest A ein Phenyl- oder $\alpha$- oder $\beta$-Naphthylrest ist, der auch durch Alkyl, Alkoxy, jeweils mit 1 bis 4 C-Atomen, Hydroxy, Cyan, Nitro, Carboxy, Chlor, Brom, Alkoxycarbonyl mit 2 bis 5 C-Atomen, Alkanoyl mit 1 bis 4 C-Atomen, Benzoyl, Phenylamino, das im Phenylrest durch Nitro substituiert sein kann, Alkanoylamino mit 2 bis 4 C-Atomen, Benzoylamino, Carbonamid, das am Stickstoff ein- oder zweifach durch Alkyl mit 1 bis 4 C-Atomen oder Phenyl substituiert sein kann, Sulfonamid, das am Stickstoff ein- oder zweifach durch Alkyl mit 1 bis 4 C-Atomen substituiert sein kann, ein-, zwei- oder dreifach substituiert sein kann.

**3.** Farbstoffzubereitungen nach Anspruch 1, dadurch gekennnzeichnet, daß der Rest A ein Benzthiazol-2-Rest ist, der vorzugsweise in 6-Stellung durch Nitro, Chlor, Carboxy, Alkyl oder Alkoxy mit 1 bis 4 C-Atomen, Hydroxy oder Acylamino mit 2 bis 5 C-Atomen monosubstituiert sein kann.

**4.** Farbstoffzubereitungen nach Anspruch 1 und/oder 2, dadurch gekennnzeichnet, daß der Rest A Phenyl ist, das durch Methyl, Carboxy, Nitro, Chloro oder Di-chloro substituiert ist.

**5.** Farbstoffzubereitungen nach einem oder mehreren der Ansprüche 1 bis 4, dadurch gekennzeichnet, daß $R^3$ Wasserstoff und $R^1$ Hydroxy oder eine gegebenenfalls substituierte Aminogruppe und $R^2$ Wasserstoff, Hydroxy oder eine gegebenenfalls substituierte Aminogruppe bedeuten, wobei die für $R^1$ und/ oder $R^2$ stehende gegebenenfalls substituierte Aminogruppe durch Alkyl, Hydroxyalkyl, Carboxyalkyl, Alkanoyl mit jeweils 1 bis 4 C-Atomen oder durch einen Rest der Formel V

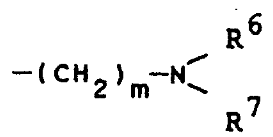

(V)

substituiert ist, wobei $R^6$ und $R^7$ unabhängig voneinander Wasserstoff oder Alkyl mit 1 bis 4 C-Atomen bedeuten.

**6.** Farbstoffzubereitungen nach einem oder mehreren der Ansprüche 1 bis 5, dadurch gekennnzeichnet, daß sie einen Farbstoff der Formel VI oder VII enthalten:

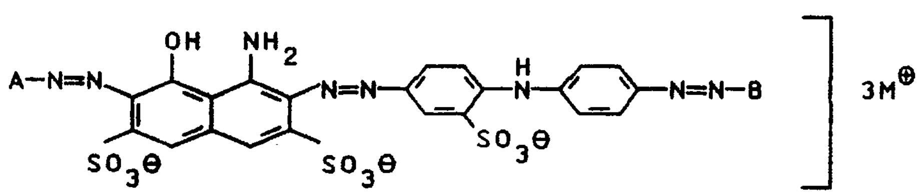

(VI)

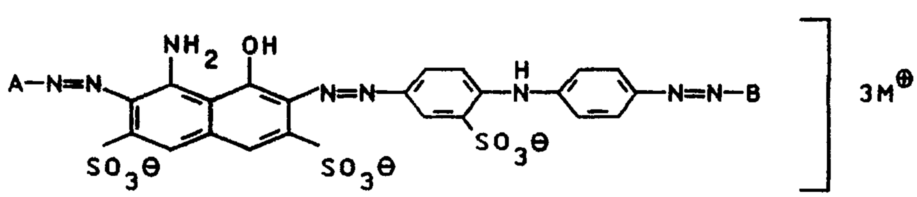

(VII)

7. Farbstoffzubereitungen nach einem oder mehreren der Ansprüche 1 bis 6, dadurch gekennnzeichnet, daß sie einen Farbstoff der Formel VI enthalten:

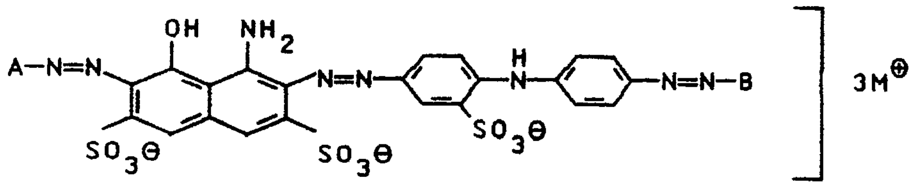 (VI)

worin
A den Phenylrest und

B den Rest 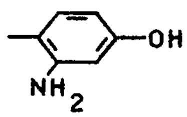 , 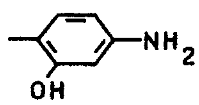 oder 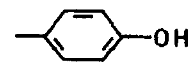

bedeuten.

8. Verfahren zur Herstellung von Farbstoffzubereitungen gemäß eines oder mehrerer der Ansprüche 1 bis 7, dadurch gekennnzeichnet, daß man die Natriumsalze der Formel Ia

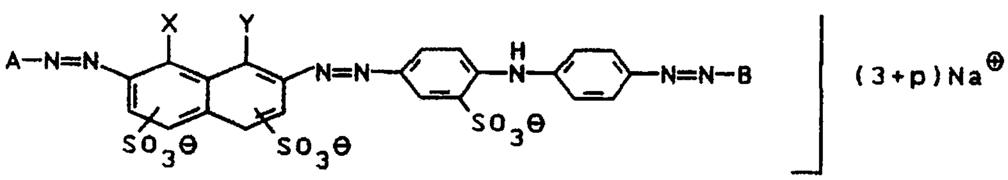 (Ia)

worin A, B, X, Y und p die in Anspruch 1 angegebenen Bedeutungen haben, in einem wäßrigen Medium mit einer Säure ausreichender Stärke auf pH Werte zwischen 0 und 4, vorzugsweise 1 bis 2,5, stellt, die erhaltenen Farbsäuren der Formel Ib

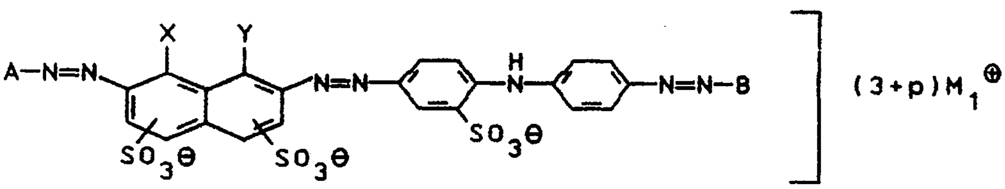 (Ib)

worin mindestens 1 Äquivalent pro Mol des Farbstoffs der Kationen $M_1^{\oplus}$ Protonen sind, abtrennt, dann wäscht und anschließend in wäßrigem Medium mit soviel Lithiumhydroxid und/oder Lithiumsalz einer hinreichend schwachen Säure und/oder Amin der Formel VIII

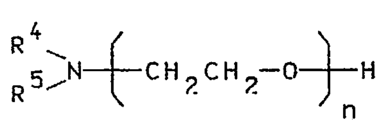 (VIII)

worin $R^4$, $R^5$ und n die in Anspruch 1 angegebenen Bedeutungen besitzen, vereinigt, daß sich in dem wäßrigen Medium ein pH-Wert von 7 bis 10, vorzugsweise von 8 bis 9, einstellt.

9. Verfahren nach Anspruch 8, dadurch gekennnzeichnet, daß die Farbsäure der Formel Ib mit einem Gemisch aus Lithiumhydroxid und/oder einem oder mehreren Lithiumsalzen hinreichend schwacher Säuren und/oder einem oder mehreren Aminen der Formel VIII vereinigt wird.

10. Verwendung der Farbstoffzubereitungen gemäß Anspruch 1 zum Färben von Baumwolle, Polyamid, Papier oder Holz oder zur Herstellung von Schreibtinten, insbesondere jedoch zum Färben von Leder.

## Claims

1. Liquid, aqueous preparations of trisazo dyestuffs of the formula I

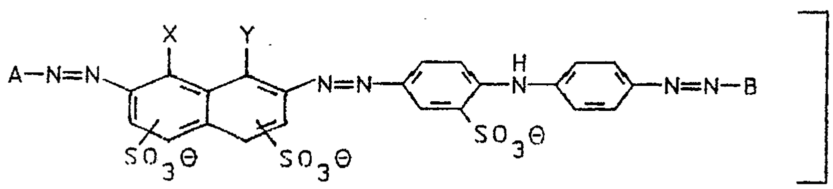

$(3+p)M^{\oplus}$ (I)

having a pH value of 7 to 10,
wherein
A denotes the radical of a diazo component of the benzene, naphthalene or heterocyclic series,
X and Y represent hydroxyl or amino groups, X being other than Y,
B denotes the radical of a coupling component of the formula II

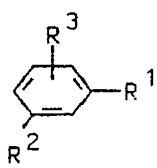

(II)

wherein
$R^1$ denotes hydroxyl or an optionally substituted amino group,
$R^2$ denotes hydrogen, hydroxyl or an optionally substituted amino group,
$R^3$ denotes hydrogen or a substituent customary in coupling components in trisazo dyestuffs and
$M^{\oplus}$ denotes a cation or a mixture of different cations wherein at least one equivalent per mole of dyestuff of the cations $M^{\oplus}$ are lithium cations and/or cations of the formula III

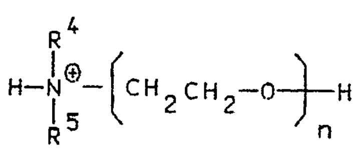

(III)

in which
n is a number from 1 to 30 and
$R^4$ and $R^5$ independently of one another denote hydrogen or a group of the formula IV

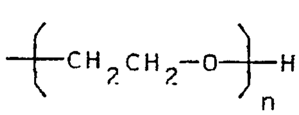

(IV)

or an aliphatic radical having 1 to 18 C atoms, and p is the same as the number of carboxylate groups

present in the molecule, it being possible for the optionally substituted amino group represented by $R^1$ and/or $R^2$ to carry one or two substituents selected from the group comprising alkyl, hydroxyalkyl, carboxyalkyl, alkanoyl, each having 1 to 4 C atoms, the group of the formula V

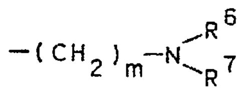 (V)

or phenyl which in turn may optionally be monosubstituted or disubstituted by alkyl having 1 to 4 C atoms, alkoxy having 1 or 2 C atoms or chlorine, $R^6$ and $R^7$, independently of one another, denoting hydrogen, alkyl having 1 to 4 C atoms, alkyl which is monosubstituted or disubstituted by OH and/or chlorine and has 1 to 4 C atoms, or $R^6$ and $R^7$, together with the N atom to which they are bound, and optionally with the inclusion of a second hetero cycle >O, >S or >$NR^8$ form a heterocyclic ring, and $R^8$ denoting alkyl or hydroxyalkyl having 1 to 8 C atoms and m denoting 2 or 3.

**2.** Dyestuff preparations according to Claim 1, characterized in that the radical A is a phenyl or $\alpha$-naphthyl or $\beta$-naphthyl radical which can also be monosubstituted, disubstituted or trisubstituted by alkyl or alkoxy having in each case 1 to 4 C atoms, hydroxyl, cyano, nitro, carboxyl, chlorine, bromine, alkoxycarbonyl having 2 to 5 C atoms, alkanoyl having 1 to 4 C atoms, benzoyl, phenylamino which can be substituted in the phenyl radical by nitro, alkanoylamino having 2 to 4 C atoms, benzoylamino, carboxamide which can be monosubstituted or disubstituted on the nitrogen by alkyl having 1 to 4 C atoms or phenyl, or sulphonamide which can be monosubstituted or disubstituted on the nitrogen by alkyl having 1 to 4 C atoms.

**3.** Dyestuff preparations according to Claim 1, characterized in that the radical A is a benzthiazol-2-yl radical which can he monosubstituted, preferably in the 6-position, by nitro, Chlorine, carboxyl, alkyl or alkoxy having 1 to 4 C atoms, hydroxyl or acylamino having 2 to 5 C atoms.

**4.** Dyestuff preparations according to Claims 1 and/or 2, characterized in that the radical A is phenyl which is substituted by methyl, carboxyl, nitro or chlorine or is disubstituted by chlorine.

**5.** Dyestuff preparations according to one or more of Claims 1 to 4, characterized in that $R^3$ denotes hydrogen and $R^1$ denotes hydroxyl or an optionally substituted amino grout, and $R^2$ denotes hydrogen, hydroxyl or an optionally substituted amino group, the optionally substituted amino group represented by $R^1$ and/or $R^2$ being substituted by alkyl, hydroxyalkyl, carboxyalkyl or alkanoyl having in each case 1 to 4 C atoms or by a radical of the formula V

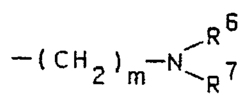 (V)

wherein $R^6$ and $R^7$ independently of one another denote hydrogen or alkyl having 1 to 4 C atoms.

**6.** Dyestuff preparations according to one or more of Claims 1 to 5, characterized in that they contain a dyestuff of the formula VI or VII

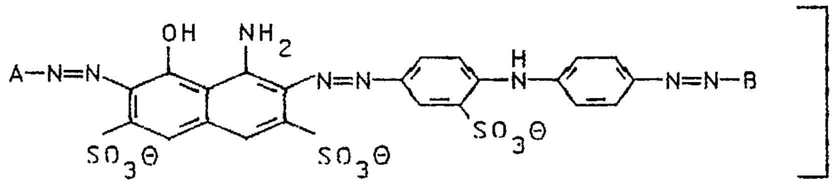

$3M^{\oplus}$ (VI)

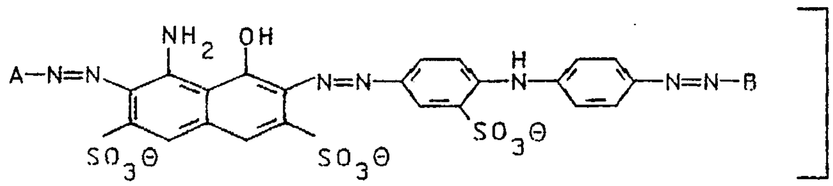

$3M^{\oplus}$ (VII)

7. Dyestuff preparations according to one or more of Claims 1 to 6, characterized in that they contain a dyestuff of the formula VI

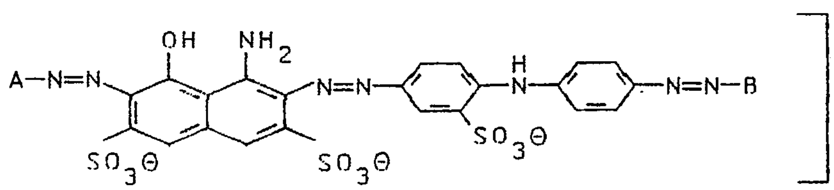

$3M^{\oplus}$ (VI)

wherein
A denotes the phenyl radical and
B denotes the radical

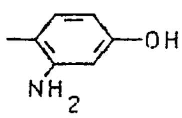 , 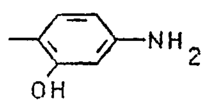 or 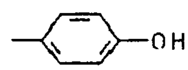

8. Process for the preparation of dyestuff preparations according to one or more of Claims 1 to 7, characterized in that the pH of the sodium salts of the formula Ia

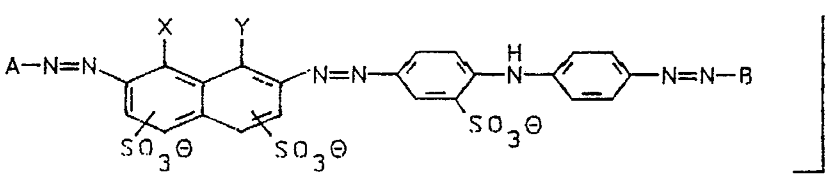

$(3+p)Na^{\oplus}$ (Ia)

wherein A, B, X, Y and p have the meanings indicated in Claim 1 is adjusted to values between 0 and 4, preferably 1 to 2.5, in an aqueous medium by means of an acid of adequate strength, and the resulting dye acids of the formula Ib

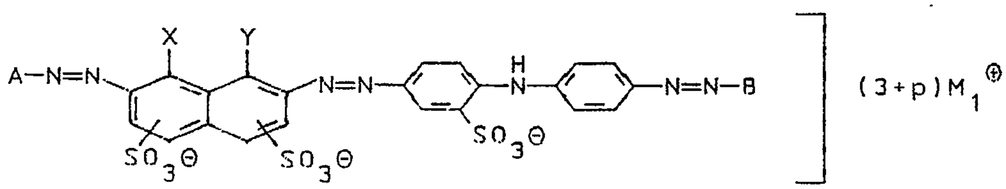

(Ib)

wherein at least 1 equivalent per mole of the dyestuff of the cations $M_1^{\oplus}$ are protons, are isolated and are then washed and subsequently combined, in an aqueous medium, with such an amount of lithium hydroxide and/or lithium salt of an adequately weak acid and/or with an amine of the formula VIII

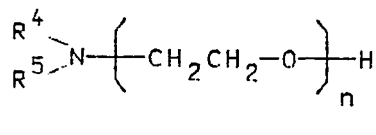

(VIII)

wherein $R^4$, $R^5$ and n have the meanings indicated in Claim 1, that in the aqueous medium a pH of 7 to 10, preferably 8 to 9, is established.

**9.** Process according to Claim 8, characterized in that the dye acid of the formula Ib is combined with a mixture of lithium hydoxide and/or one or more lithium salts of adequately weak acids and/or one or more amines of the formula VIII.

**10.** The use of the dyestuff preparations according to Claim 1 for dyeing cotton, polyamide, paper or wood or for the preparation of writing inks, but especially for dyeing leather.

**Revendications**

**1.** Préparations aqueuses liquides, ayant un pH de 7 à 10, de colorants trisazoïques de formule I :

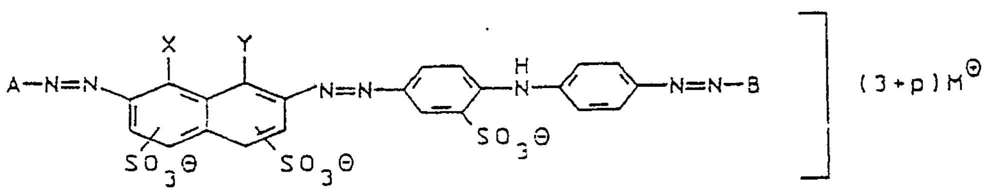

(I)

dans laquelle :

| | |
|---|---|
| A | représente le reste d'un composant diazotable de la série benzénique, naphtalénique ou hétérocyclique, |
| X et Y | représentent chacun un groupe hydroxy ou amino, X étant différent de Y, |
| B | représente le reste d'un copulant de formule II : |

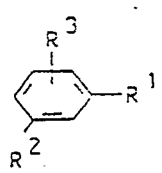

(II)

dans laquelle :

| | |
|---|---|
| $R^1$ | représente un groupe hydroxy ou un groupe amino éventuellement substitué, |
| $R^2$ | représente un atome d'hydrogène, un groupe hydroxy ou un groupe amino éventuellement substitué, |
| $R^3$ | représente un atome d'hydrogène ou un substituant usuel sur les copulants de colorants |

trisazoïques, et

$M^+$ représente un cation ou un mélange de différents cations, et, par mole du colorant, il y a au moins un équivalent des cations $M^+$ des cations lithium et/ou de cations de formule III :

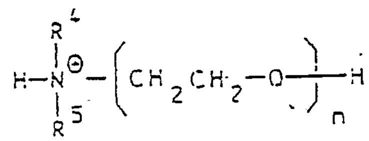

(III)

dans laquelle :

n est un nombre valant 1 à 30, et

$R^4$ et $R^5$ représentent, indépendamment l'un de l'autre, un atome d'hydrogène ou un groupe de formule :

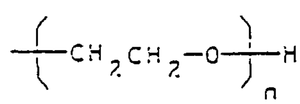

ou un reste aliphatique ayant 1 à 18 atomes de carbone, et

p est égal au nombre des groupes carboxylates présents dans la molécule,

le groupe amino éventuellement substitué, représenté par $R^1$ et/ou $R^2$ peut porter un ou deux substituants choisis dans l'ensemble constitué par un groupe alkyle, hydroxyalkyle, carboxyalkyle, alcanoyle ayant chacun 1 à 4 atomes de carbone le groupe de formule V :

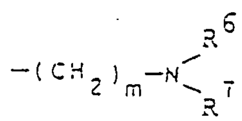

(V)

ou le groupe phényle, qui peut pour sa part être éventuellement substitué une ou deux fois par un groupe alkyle ayant 1 à 4 atomes de carbone, alcoxy ayant 1 ou 2 atomes de carbone ou par du chlore,

et $R^6$ et $R^7$ représentent chacun, indépendamment l'un de l'autre, un atome d'hydrogène, un groupe alkyle ayant 1 à 4 atomes de carbone, un groupe alkyle substitué une ou deux fois par OH et/ou par du chlore et ayant 1 à 4 atomes de carbone, ou bien $R^6$ et $R^7$ peuvent, avec l'atome d'azote auquel ils sont fixés et éventuellement en comprenant un second hétéro-chaînon :

$>O$, $>S$ ou $>NR^8$

former un noyau hétérocyclique, et $R^8$ représente un groupe alkyle ou hydroxyalkyle ayant 1 à 8 atomes de carbone, et m vaut 2 ou 3.

**2.** Préparations de colorants selon la revendication 1, caractérisées en ce que le reste A est un reste phényle ou alpha- ou bêta-naphtyle, qui peut être substitué, une, deux ou trois fois, par un groupe alkyle, alcoxy, ayant chacun 1 à 4 atomes de carbone, hydroxy, cyano, nitro, carboxy, chloro, bromo, alcoxycarbonyle ayant 2 à 5 atomes de carbone, alcanoyle ayant 1 à 4 atomes de carbone, benzoyle, phénylamino qui peut être substitué dans le reste phényle par un groupe nitro, alcanoylamino ayant 2 à 4 atomes de carbone, benzoylamino, carboxamide (qui peut être substitué sur l'azote une ou deux fois par un groupe alkyle ayant 1 à 4 atomes de carbone ou par un groupe phényle), sulfonamide (qui peut être substitué sur l'azote une ou deux fois par un groupe alkyle ayant 1 à 4 atomes de carbone).

**3.** Préparations de colorants selon la revendication 1, caractérisées en ce que le reste A est un reste de benzothiazole-2, qui peut être mono-substitué, avantageusement en position 6, par un groupe nitro,

chloro, carboxy, alkyle ou alcoxy ayant 1 à 4 atomes de carbone, hydroxy ou acylamino ayant 2 à 5 atomes de carbone.

**4.** Préparations de colorants selon la revendication 1 et/ou 2, caractérisées en ce que le reste A est un reste phényle, qui est substitué par un groupe méthyle, carboxy, nitro, chloro ou dichloro.

**5.** Préparations de colorants selon une ou plusieurs des revendications 1 à 4, caractérisées en ce que $R^3$ représente un atome d'hydrogène et $R^1$ représente un groupe hydroxy ou un groupe amino éventuellement substitué et $R^2$ représente un atome d'hydrogène, un groupe hydroxy ou un groupe amino éventuellement substitué, le groupe amino éventuellement substitué, représenté par $R^1$ et/ou par $R^2$, est substitué par un groupe alkyle, hydroxyalkyle, carboxyalkyle, alcanoyle ayant chacun 1 à 4 atomes de carbone ou par un reste de formule V :

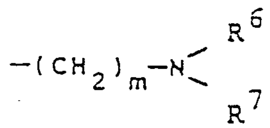
(V)

dans laquelle $R^6$ et $R^7$ représentent chacun, indépendamment l'un de l'autre, un atome d'hydrogène ou un groupe alkyle ayant 1 à 4 atomes de carbone.

**6.** Préparations de colorants selon une ou plusieurs des revendications 1 à 5, caractérisées en ce qu'elles contiennent un colorant répondant à la formule VI ou VII :

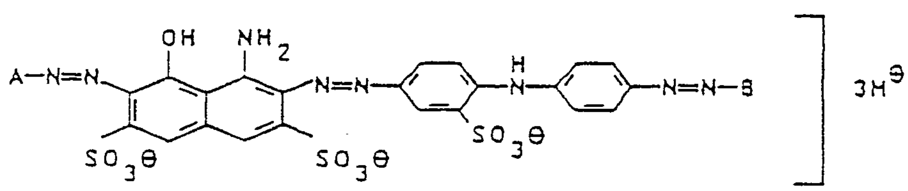
(VI)

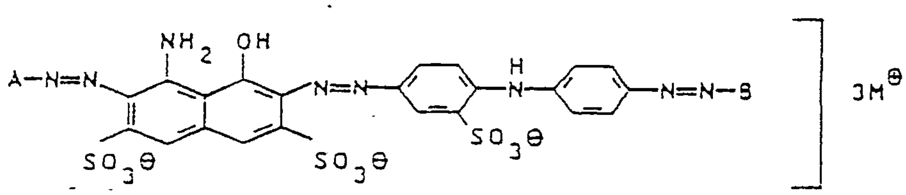
(VII)

**7.** Préparations de colorants selon une ou plusieurs des revendications 1 à 6, caractérisées en ce qu'elles contiennent un colorant de formule VI :

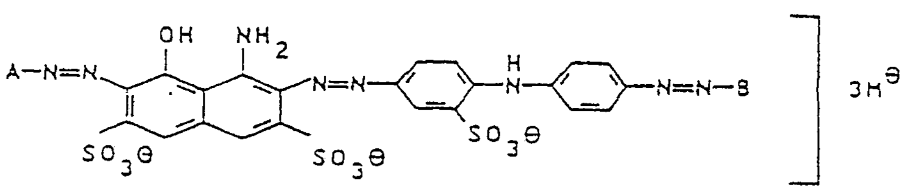
(VI)

dans laquelle :

A représente le reste phényle, et

B représente le reste :

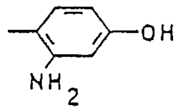 , 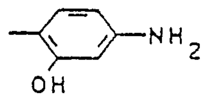 ou 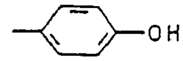

**8.** Procédé pour préparer des préparations de colorants selon une ou plusieurs des revendications 1 à 7, caractérisé en ce qu'on ajuste les sels de sodium de formule Ia :

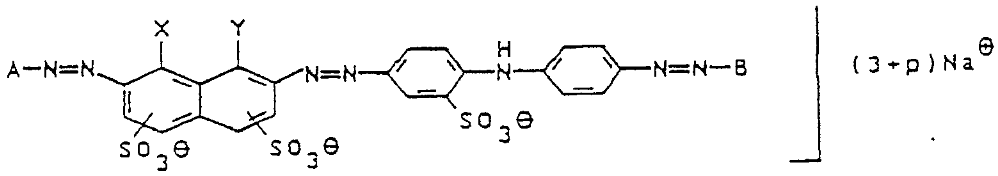

(Ia)

dans laquelle A, B, X, Y et p ont les sens indiqués à la revendication 1) dans un milieu aqueux avec un acide de force suffisante pour obtenir des pH compris entre 0 et 4, avantageusement entre 1 et 2,5, on sépare les colorants acides obtenus de formule Ib :

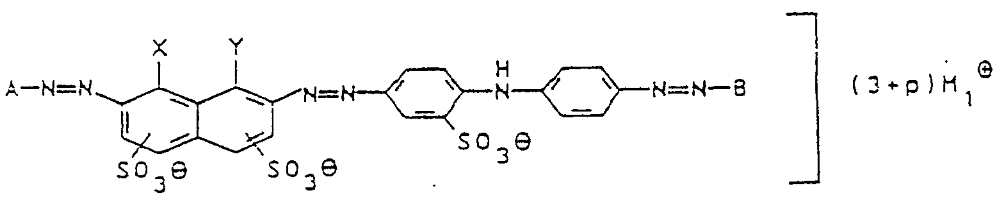

(Ib)

dans laquelle, par mole du colorant, au moins 1 équivalent est constitué par des protons du cation $M_1^+$, puis on lave et l'on combine en milieu aqueux avec une quantité d'hydroxyde de lithium et/ou d'un sel de lithium d'un acide suffisamment faible et/ou d'une amine de formule VIII :

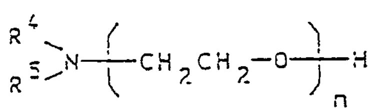

(VIII)

(dans laquelle $R^4$, $R^5$ et n ont les sens indiqués à la revendication 1) de façon à ajuster le milieu aqueux à un pH de 7 à 10, avantageusement de 8 à 9.

**9.** Procédé selon la revendication 8, caractérisé en ce qu'on combine le colorant acide de formule Ib avec un mélange d'hydroxyde de lithium et/ou d'un ou plusieurs sels de lithium d'acides suffisamment faible et/ou une ou plusieurs amines de formule VIII.

**10.** Utilisation des préparations de colorants selon la revendication 1 pour teindre le coton, du polyamide, du papier ou du bois ou pour préparer des encres d'impression, mais en particulier pour teindre le cuir.